# EUROPEAN PATENT APPLICATION

(11) **EP 3 326 967 A1**
(43) Date of publication of application: **30.05.2018**
(21) Application number: 16200748.8
(22) Date of filing: 25.11.2016
(51) Int. Cl.: C01B 25/40, C09K 21/12, C08K 3/32

(54) **MODIFIED MULTIFUNCTIONAL POLYPHOSPHATE AND METHOD TO PREPARE THE MULTIFUNCTIONAL MODIFIED POLYPHOSPHATES**

(71) Applicant: Leibniz-Institut für Polymerforschung Dresden e.V., 01069 Dresden (DE)
(72) Inventor: DE-YI, Wang, 28906 Getafe (ES); LI, Zhi, 28906 Getafe (ES); XIAO, Dan, 01069 Dresden (DE); WAGENKNECHT, Udo, 01069 Dresden (DE); GOHS, Uwe, 01069 Dresden (DE)
(74) Representative: Rauschenbach, Marion

(57) **Abstract**

The present invention provides a modified multifunctional polyphosphate and a method to prepare the modified multifunctional polyphosphate, which can be used as flame retardant crosslinker to polymers under the electron beam treatment aiming at improving the properties of the polymer composites.

The primary object of the present invention is directed to the existing technical disadvantages, which provide a family of modified polyphosphate as flame-retardant graft- and/or crosslinker to polymers under the electron beam treatment.

The modified multifunctional polyphosphate derived from polyphosphate 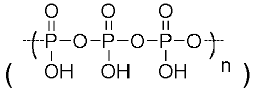 and/or ammonium polyphosphate 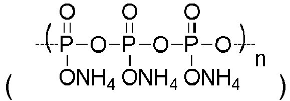 whose molecular structure can be expressed by the following general structure: 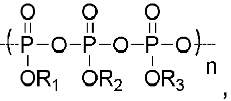 n=10-3000, wherein, R₁, R₂ and R₃ may be the same or may be different, but one of them contain carbon carbon double bond (C=C).

## Description

The present invention provides a modified multifunctional polyphosphate and a method to prepare the modified multifunctional polyphosphate, which can be used as flame retardant crosslinker to polymers under the electron beam treatment aiming at improving the properties of the polymer composites.

Many flame retardants have been developed for polymers in the last three decades. Traditionally, halogen-containing compounds with antimony trioxide are the main flame retardants of polymer as a synergistic agent, but to consider the safety aspects and environmental problems, the use of some flame retardants has been limited because of the evolution of toxic gases and corrosive smoke during combustion. Now halogen-free compounds are regarded as promising flame retardants because of their environmentally friendly properties. Metallic hydroxides and oxides are a second group of flame retardant additives used in polypropylene, but the high loading (60 wt. %) seriously destroys the mechanical properties of polymeric materials.

Ammonium polyphosphate (APP) is the most widely used in preparing flame-retarded materials due to its high contents of phosphorus (P) and nitrogen (N), both of which contribute to the flame retardation of materials. However, it is not an efficient flame retardant for PP when it is used alone. The primary reason for the failure in flame retarding polyolefin is that both APP and polyolefin cannot be involved in the charring during the combustion process.

In order to expand its applications in the polyolefin field, much work has been done in past decades. Intumescent flame retardant (IFR) systems are well known as a new generation of flame retardants in polypropylene and other polyolefins for some of their merits. Usually, an intumescent flame retardant is made of three constituents: acid sources, blowing agent and carbonization agent. However, traditional IFR additives have some shortcomings in flame retardancy of polyolefins. The three components of traditional IFR might undergo migration, as well as influence the compatibility with matrix. Finally, a reduction of compatibility, results in reduces mechanical properties. This greatly limits its further applications.

US 7,611,771 B2 describes a polyphosphate flame retardant with a silicone resin, which is applied to cover the particles of the polyphosphate compound. The flame retardant resin composition, containing a binder resin, environmentally soft flame retardant textile products can be stably obtained.

US 7,005,457 B2 describes multi-functional microencapsulated additives for polymeric compositions comprising a core material including a major portion of one or more functional additives and a shell material including at least one functional additive. The polymeric products incorporating microcapsules may be formulated to provide improved fire resistance, smoke suppression, infrared attenuation, strength, thermal stability.

US 5,043,218 A discloses a flame resistant, expandable styrene polymers and foams and flame retardants, containing a styrene polymer, from 0.4 to 6 % by weight of hexabromocyclododecane having a mean particle size of from 1 to 50 µm. This application also teaches that polystyrene foams containing such microcapsules can be made using hydrocarbon blowing agents.

EP 0180795 A discloses a method for the preparation of hydrolysis-stable finely divided flame retardants based on ammonium polyphosphate microencapsulated within a melamine formaldehyde resin.

CN 103756013 A discloses a flame-retardant modified ammonium polyphosphate were adding the flame-retardant modified ammonium polyphosphate into polyolefin or epoxy resins.

CN 101429291 A discloses a method for coating syndiotactic polystyrene poly-ammonium phosphate with microcapsule. Ammonium polyphosphate, syndiotactic polystyrene resin and a dispersant are added in a reaction kettle at a temperature between 40 to 200 °C. Compared with uncoated ammonium polyphosphate, the microcapsule-coated ammonium polyphosphate has good particle fluidity, compact and uniform coating.

CN 101570325 A discloses an ammonium polyphosphate modifying method. A solution of modifier and disperser is poured into ammonium polyphosphate to obtain the modified ammonium polyphosphate by ion reactions.

EP 0924166 A1 discloses a thermoplastic-coated ammonium polyphosphate, which comprises a core material which comprises ammonium polyphosphate and a thermosetting resin, a melamine monomer or a surface-treating agent, and a coating layer of a thermoplastic resin which covers the core material. The materials were modified with triazine, which was improving the flame-retardant efficiency of APP.

Zhu-Bao Shao, et al. (ACS Appl. Mater. Interfaces 2014, 6, 7363) reported piperazine modified ammonium polyphosphate exhibited superior performance compared with PP/APP composite. The formation of stable char layer at the later stage, consequently improving the flame-retardant efficiency of APP.

Zhu-Bao Shao, et al. (J. Mater. Chem. A, 2014, 2, 13955) reported ethanolamine was used to chemically modify APP via ion exchange reaction. The prepared modified APP acted not only as the acid source and blowing source, but also as an excellent charring agent.

In contrast to the previous arts, in this invention, it is disclose a modified multifunctional polyphosphate and a method to prepare this modified polyphosphate and the use of them as flame-retardant crosslinker to polymers.

The primary object of the present invention is directed to the existing technical disadvantages, which provide a family of modified polyphosphate as flame-retardant graft- and/or crosslinker to polymers under the electron beam treatment.

Moreover, the present invention also provides the preparing, processing and cross-linking methods for novel modified multifunctional polyphosphate in polymer. Moreover, the new polymer composites under the electron beam treatment have excellent flame retardancy, high thermal resistance, low smoke release as well as good mechanical properties and processability.

Compared with traditional flame retardants based polymer composites, the new polymer composites under the electron beam treatment have excellent flame retardancy, high thermal resistance, low smoke release, good mechanical properties and processability.

Furthermore, the method was convenient for preparing the modified multifunctional polyphosphate as flame retardants because of its simplicity, raw materials, mild conditions, and easy to control and thereby was prospective in industrial application.

The inventive modified multifunctional polyphosphate derived from polyphosphate 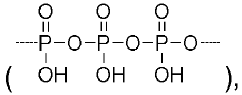 and/or ammonium polyphosphate 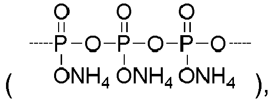 whose molecular structure can be expressed by the following general structure: 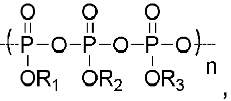 n=10-3000,
wherein, R₁, and/or R₂ and/or R₃ may be the same or may be different, but one of them should contain carbon carbon double bond (C=C), which is used as graft- and/or crosslinker to polymer.

R₁ derived from allyl group of amine, may be 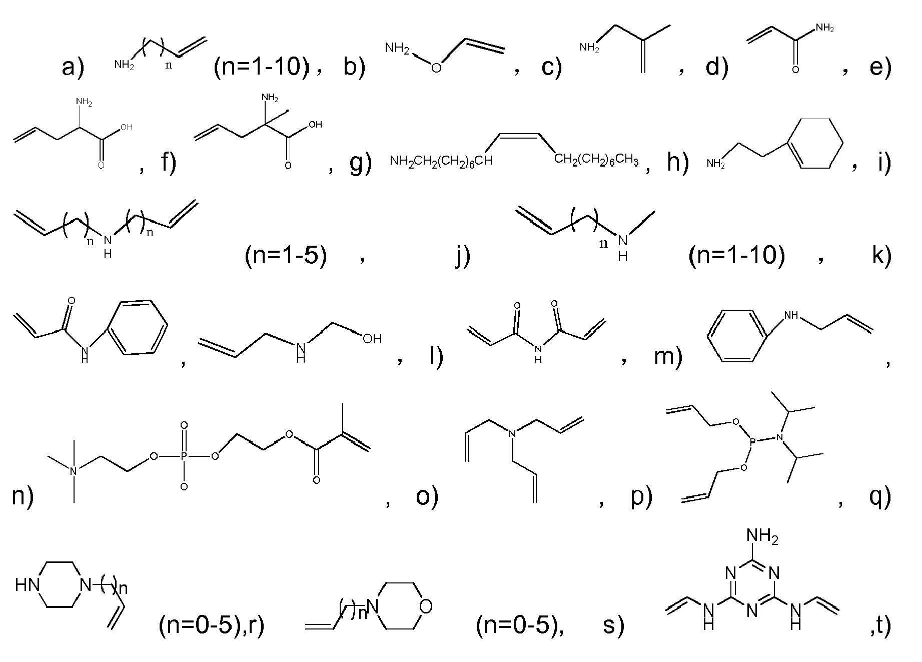 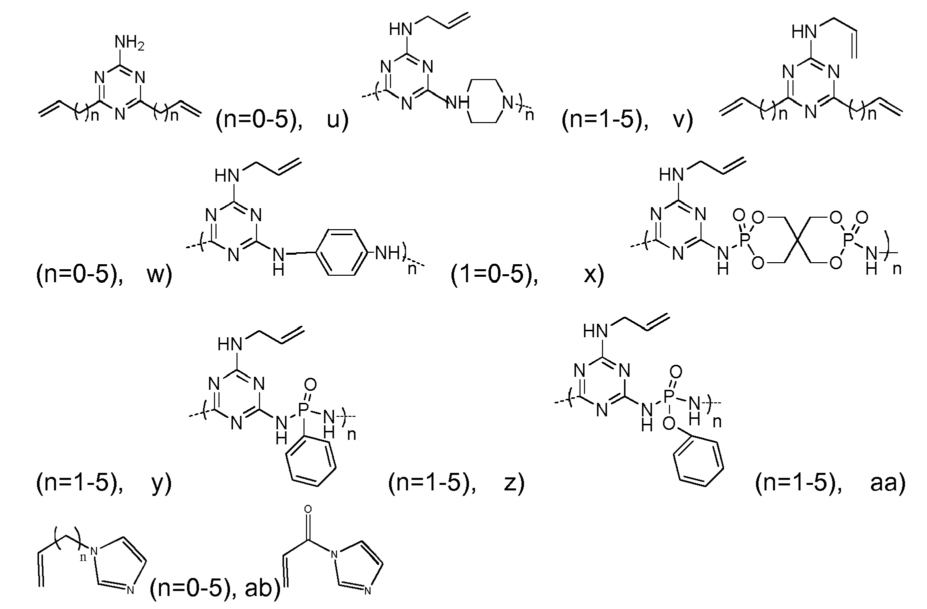 and/or their hydrochloride.

R₂ derived from cyclodextrin, whose molecular structure can be expressed by the following general structure: 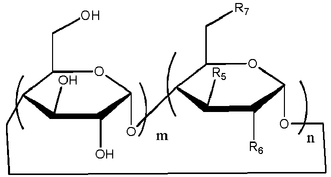
wherein, m is from 0 to 7 and n is from 1 to 8. m + n may be 6, 7, or 8. R₅, R₆ and R₇ are one of the -OH or -RNH₂ and one of R₁, R₂ and R₃ are -RNH₂; R is (CH₂)ₙ, NH (CH₂)ₙ, NH (CH₂)ₙNH (CH₂)ₙ, CO (CH₂) or O(CH₂)ₙ, n is 1-15.
R₃, derived from allyl group of silicon, may be CH₂=CHNH (CH₂)ₙ Si(CH₃)₃. n is 0 - 15.

These inventive modified multifunctional polyphosphate are used as flame-retardant graft- and/or cross-linker to polymer to prepare polymer composites via twin-screw extruder, three-roll mill and/or injectors.

The method to prepare the inventive modified multifunctional polyphosphate comprise following steps:
Polyphosphate 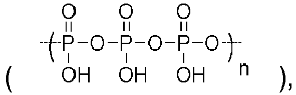 and/or ammonium polyphosphate 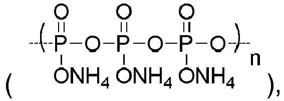 whose molecular structure can be expressed by the following general structure: 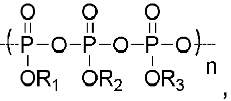 n=10-3000, were mixed with organic solvent and water or water and were charged to a three-neck round-bottom flask equipped with a stirrer under inert gases. The modifier R₁ and/or R₂ and/or R₃ were added together or one or more of R₁ and R₂ and R₃ were added stepwize in the flask. Then, the mixture was heated up from 50 to 120 °C. Next, the reaction mixture was cooled down to room temperature (around 20 °C). After that, the mixture was concentrated at reduced pressure and washed with organic solvent. The solid was filtered, and the sample was dried in a vacuum oven at 80 °C for 12 h. Then, the product was melt mixed with polymer or polymer blend. Afterwards, a further processing of modified multifunctional polyphosphate containing polymer or polymer blend is possible.

The organic solvent ratio and water ratio were advantageously 0-0.5 and 1, respectively. The organic solvent is advantageously acetone, methanol, ethanol, isopropanol, chloroform or tetrahydrofuran.

The modified multifunctional polyphosphate was mixed to a polymer using twin-screw extruder, roll mill and/or kneaders (mixing chambers) to prepare a polymer composite.

The polymer includes advantageously polypropylene (PP), polyethylene (PE), polyethylene terephthalate (PET), rubber, polyvinylchlorid (PVC), polylactid (PLA), epoxy resin, ethylene-vinyl acetate (EVA), polyamide (PA), polybutylenterephthalat (PBT), acrylonitrile butadiene styrene (ABS), poly(vinyl alcohol) (PVA), polyimide (PI).

During a further processing the modified multifunctional polyphosphate containing polymer or polymer blend can be treated with high energy electrons (EB treatment). The electron beam treatment can be used advantageously instead of peroxides, UV and/or gamma irradiation due to its locally and temporal precise generation of polymer radicals. The electron beam treatment advantageously will be used with doses from 5 to 500 kGy.

The effect of the invention is, that during the electron beam treatment the modified polyphosphate whose molecular structure can be expressed by the following general structure: 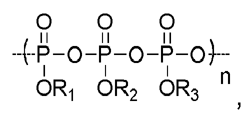 n=10-3000, will react with polymer radicals by its carbon carbon double bonds (C=C) in order to generate polymer-modified multifunctional polyphosphate graftlinks- and/or crosslinks.

FTIR spectra of APP and AAPP (prepared according to example 1) show, that the region of 3407-3000 cm⁻¹ corresponded to the absorption -NH₄⁺symmetry stretching vibration. Two peaks locating at 2654 cm⁻¹ and 2150 cm⁻¹ corresponded to the vibration of NH₃⁺. The peaks locating at 1260-1228 cm⁻¹ were attributed to the P=O. And the peak appeared at 1532 cm⁻¹ were ascribed to the vibration of -CH₂- and -NH₃⁺. And the peak locating at 1062 cm⁻¹ was assigned to the P-O-N vibrations. After incorporating allylamine link APP, the peak appeared at 1631 cm⁻¹ for AAPP, which was ascribed to the vibration of C=C.

The structural conformation was confirmed by ¹H NMR-spectroscopy. The peak at from 5.98-5.91 ppm could be assigned to carbon-carbon double bond of hydrogen on the structure of allylamine. The intensities in the range from 5.31 ppm to 5.20 ppm correspond to the proton of the carbon-carbon double bonds of two hydrogens, which was connected with allylamine. The peak at from 3.17 ppm to 3.15 could be assigned to the proton on the methylene. For APP, there was no more ¹H-NMR peak other than the water peak at 4.80 ppm. For AAPP, the three peaks correspondingly shifted to about 5.71, 5.25 and 3.46 ppm, which were attributed to CH=, CH₂=, CH₂-. In addition, no more peaks could be observed other than the allylamine peaks for AAPP. Since allylamine link APP with chemical bond, the allylamine of chemical shifts moved. All these results mentioned above further proved that the AAPP was successfully obtained.

The structural conformation was confirmed by means of ³¹P NMR-spectroscopy. The peak at from -23.4 ppm could be assigned to APP. Due to allylamine link APP with chemical bond, the allylamine of chemical shifts moved to -24.1 ppm. In addition, no more peaks could be observed other than the allylamine peaks for AAPP.

The shape of APP particles was smooth surface. However, the surfaces of AAPP particles were rough and it seems that some particles clung to each other. Obviously, the morphological surfaces of AAPP were rather different from those of APP, suggesting that allylamine link APP with chemical bond.

Compare with the state of the art, this invention has the following advantage.
The present invention of modified multifunctional polyphosphate maintaining the traditional acid source and gas source are added functional carbon carbon double bond in the molecular structure, which improve the thermal stability and mechanical properties after radical controlled chemical reaction.

Compared with traditional flame retardants based polymer composites, in this invention the new polymer composites after radical controlled chemical reaction have excellent flame retardancy, high thermal resistance, low smoke release, good mechanical properties and processability. The present invention provides multi-functional modified polyphosphate have excellent flame retardancy, multifunction, thermal resistance, low smoke release, good processability.

The present invention provided the method was convenient for preparing multifunctional modified flame retardants because of its simplicity, raw materials, mild conditions and easy to control and thereby was prospective in industrial application.

The following examples are meant to illustrate various aspects of the invention and are not meant to limit the scope of the invention in any way.

### Example 1

The mixed solvent of water and acetone (solvent 1; ratio 100 : 5) was charged to a three-neck round-bottom flask equipped with a stirrer under a nitrogen atmosphere. 30 g Allylamine (Sigma-Aldrich) (R1: a) with n = 1 - as well as R₂ = R₃ = R₁) and 110 g APP (Budenheim) were added in the flask. Then, the mixture was heated up to 50 °C with a heating rate of 10 K/min and the release of ammonia. Next, the reaction mixture was cooled down to room temperature (20 °C, cooling rate of 10 K/min). After that, the mixture was concentrated by using rotary evaporator and washed with ethanol. The white solid was filtered and then the sample was dried in a vacuum oven at 80 °C for 12 h (yield > 90 %).

### Example 2

The mixed solvent of water and ethanol (solvent 2; ratio 100:10) was charged to a three-neck round-bottom flask equipped with a stirrer under a nitrogen atmosphere. According to example 1 Allylamine (60 g) and APP (100 g) were added in the flask. Then, the mixture was heated up to 80 °C with a heating rate of 10 K/min and the release of ammonia. Next, the reaction mixture was cooled down to room temperature. After that, the mixture was concentrated at reduced pressure and washed with ethanol. The white solid was filtered and then the sample was dried in a vacuum oven at 80 °C for 12 h (yield is 91 %).

### Example 3

Water (1000 ml) was charged to a three-neck round-bottom flask equipped with a stirrer under a nitrogen atmosphere. According to example 1 Allylamine (50 g) and polyphosphate (100 g) (Budenheim) were added in the flask. Then, the mixture was heated up to 90 °C with a heating rate of 10 K/min and the release of ammonia. Next, the reaction mixture was cooled down to room temperature. After that, the mixture was concentrated at reduced pressure and washed with ethanol. The white solid was filtered and then the sample was dried in a vacuum oven at 80 °C for 12 h (yield is 85 %).

### Example 4

The mixed solvent of water and ethanol (solvent 3; ratio 100:5) (1000 ml) was charged to a three-neck round-bottom flask equipped with a stirrer under a nitrogen atmosphere. According to example 1 Allylamine (50 g) and APP (100 g) were added in the flask. Then, the mixture was heated up to 60 °C with a heating rate of 10 K/min and the release of ammonia. Next, the reaction mixture was cooled down to room temperature. After that, the mixture was concentrated at reduced pressure and washed with ethanol. The white solid was filtered and then the sample was dried in a vacuum oven at 80 °C for 12 h (yield is 83 %).

### Example 5

The mixed solvent of water and ethanol (ratio 100:5) (500 ml) was charged to a three-neck round-bottom flask equipped with a stirrer under a nitrogen atmosphere. Diallylamine (60 g, Sigma-Aldrich; R1: b) - as well as R₂ = R₃ = R₁) and polyphosphate (100 g) were added in the flask. Then, the mixture was heated up to 60 °C with a heating rate of 10 K/min and the release of ammonia. Next, the reaction mixture was cooled down to room temperature (cooling rate of 10 K/min). After that, the mixture was concentrated at reduced pressure and washed with ethanol. The white solid was filtered and then the sample was dried in a vacuum oven at 80 °C for 12 h (yield is 90 %).

### Example 6

The mixed solvent of water and ethanol (solvent 4; ratio 100:3) (600 ml) was charged to a three-neck round-bottom flask equipped with a stirrer under a nitrogen atmosphere. According to example 5 Diallylamine (60 g) and polyphosphate (100 g) were added in the flask. Then, the mixture was heated up to 80 °C with a heating rate of 10 K/min and the release of ammonia. Next, the reaction mixture was cooled down to room temperature. After that, the mixture was washed with ethanol. The white solid was filtered and then the sample was dried in a vacuum oven at 80 °C for 12 h (yield is 91 %).

### Example 7

Water (1000 ml) was charged to a three-neck round-bottom flask equipped with a stirrer under a nitrogen atmosphere. According to example 1 Allylamine (50 g; Sigma-Aldrich; R1: a) with n = 1 - as well as R₂ = R₃ = R₁) and APP (100 g) were added in the flask. Then, the mixture was heated up to 60 °C with a heating rate of 10 K/min and the release of ammonia. Next, the reaction mixture was cooled down to room temperature (cooling rate of 10 K/min). After that, the mixture was concentrated at reduced pressure and washed with ethanol. The white solid was filtered and then the sample was dried in a vacuum oven at 80 °C for 12 h.

### Example 8

Both 1 kg APP and 1 kg of white solid according to example 1 (AAPP) were dried in a vacuum oven at 80 °C for 12 h before used. Then, PP (Borealis, PP HD120M0) mixed with 25 wt.-% of APP and AAPP were prepared by extrusion (twin-screw extruder KETSE 20/40 EC, Brabender) with a rotation speed of 80 rpm at the following temperature protocol from the feed zone to the die: 175, 180, 180, 175, 175 and 170 °C. Finally, the pellets were put into injection molding machine (Arburg 320 C) at a processing temperature around 200 °C in order to produce the samples with suitable dimensions for on UL-94 sample LOI and tensile tests. In addition, cone calorimeter tests (CC) sample sheets were compression molded by hot-plate press (LabPro 400, Fontijne Presses) at around 210 °C. Flame retardant PP composites were irradiated at room temperature in nitrogen atmosphere with an average dose 36 kGy using an ELV-2 electron accelerator (BINP, Novosibirsk, Russia). The electron energy was 1.5 MeV and the electron current amounted to 4 mA.

LOI, the minimum oxygen concentration by volume for maintaining the burning of a material, was an important parameter for evaluating the flame-retardant of polymeric material. The LOI and UL-94 tests of neat PP, PP/APP (25 wt%) and PP/AAPP (25 wt%) composites were shown in Table 1.

**Table 1**

| Component (wt%) | | | LOI% | UL94 | |
|---|---|---|---|---|---|
| PP | APP | AAPP | | Dripping | Rating |
| 100 | 0 | 0 | 17.6 | YES | N.R. |
| 75 | 25 | 0 | 19.6 | YES | N.R. |
| 75 | 0 | 25 | 30.5 | YES | N.R. |

N.R.: no rating

Cone calorimeter (CC) was an effective approach to evaluate the combustion behaviors of flame retardant polymers. The peak heat release rate (PHRR), total heat release (THR), the average mass loss rate (Av-MLR), smoke production rate (SPR), and total smoke production (TSP) of neat PP, PP/APP (25 wt%) and PP/AAPP (25 wt%) composites were shown in Table 2.

**Table 2**

| polymer/composites | | | |
|---|---|---|---|
| Sample | Pure PP | PP/APP(25 wt%) | PP/AAPP(25 wt%) |
| PHRR (Kw/m²) | 962±14 | 607±23 | 269±16 |
| THR (MJ/m²) | 74±2 | 88±6 | 64±3 |
| Av-MLR (g/s) | 7±1 | 7±1 | 3±1 |
| TSP(m²) | 7±1 | 12±1 | 7±2 |
| SPR (m²/s) | 0.07±0.01 | 0.07±0.01 | 0.02±0.01 |

The effect of AAPP on the thermal stability of PP composites was revealed through thermogravimetric analysis (TGA). Thermogravimetric (TG) and derivative thermogravimetry (DTG) analysis curves of non-irradiated and irradiated PP/AAPP(25 wt%) were displayed in Table 3.

**Table 3**

| Sample | Tₒₙₛₑₜ (°C) | Tₘₐₓ (°C) | Rₘₐₓ (%/°C) | Residue (%) | |
|---|---|---|---|---|---|
| | | | | 500°C | 600°C |
| PP | 374 | 427 | 2.5 | 0.75 | 0.84 |
| PP+AAPP(25 wt%) | 293 | 439 | 2.4 | 14.1 | 11.5 |
| EB PP* | 348 | 452 | 1.0 | 20.1 | 17.5 |
| EB PP+ AAPP* (25 wt%) | 295 | 453 | 1.3 | 21.2 | 11.4 |

| | | | | | |
|---|---|---|---|---|---|
| Tₒₙₛₑₜ was the temperature of 5 % mass loss Tₘₐₓ was the temperature of maximum decomposing Rₘₐₓ was maximum mass loss rate *The composites were irradiated with a dose of 36 kGy | | | | | |

Tensile results of non-irradiated and irradiated PP/APP(25 wt%) and PP/AAPP(25 wt%) composites were presented in Table 4.

**Table 4**

| Samples | Tensile strength (MPa) | Young modulus (MPa) | Elongation at break (%) |
|---|---|---|---|
| PP | 23.5±0.8 | 984.7±7.9 | 743±21 |
| PP+ APP (25 wt%) | 19.3±0.6 | 1464.3±23.9 | 51.4±1.8 |
| PP+ AAPP (25 wt%) | 23.5±1.4 | 1027.0±39.3 | 25.1 ±1.2 |
| EB PP* | 23.1±0.7 | 847.0±63.6 | 40.7±8.5 |
| EB PP+ APP* (25 wt%) | 18.7±0.3 | 1108.4±112.6 | 15.9±1.4 |
| EB PP+AAPP* (25 wt%) | 20.6±0.2 | 1042.1±31.8 | 13.4±3.4 |

| | | | |
|---|---|---|---|
| *The composites were irradiated with a dose of 36 kGy | | | |

### Example 9

Both 1 kg APP and 1 kg of the with solid according to example 1 (AAPP) were dried in a vacuum oven at 80 °C for 12 h before used. Then, PP mixed with 30 wt % of APP and AAPP were prepared by extrusion (twin-screw extruder KETSE 20/40 EC, Brabender) with rotation speed of 80 rpm at the following temperature protocol from the feed zone to the die: 175, 180, 180, 175, 175 and 170 °C. Finally, the pellets were put into injection molding machine (Arburg 320 C) at a processing temperature around 200 °C in order to produce the samples with suitable dimensions for on UL-94 sample, LOI, and tensile tests. In addition, cone calorimeter tests (CC) sample sheets were compression molded by hot-plate press (LabPro 400, Fontijne Presses) at around 210 °C. Flame retardant PP composites were irradiated at room temperature in nitrogen atmosphere with an average dose 36 kGy using an ELV-2 electron accelerator (BINP, Novosibirsk, Russia). The electron energy was 1.5 MeV and the electron current amounted to 4 mA.

Table 5 shows LOI and UL94 results of pure PP, PP/APP (30 wt%) and PP/AAPP (30 wt%) composites.

**Table 5**

| Component (wt%) | | | LOI% | UL94 | |
|---|---|---|---|---|---|
| PP | APP | AAPP | | Dripping | Rating |
| 100 | 0 | 0 | 17.6 | YES | N.R. |
| 70 | 30 | 0 | 20.3 | YES | N.R. |
| 70 | 0 | 30 | 32.5 | YES | N.R. |

| | | | | | |
|---|---|---|---|---|---|
| N.R.: no rating | | | | | |

Table 6 shows cone calorimeter results of pure PP, PP/APP(30 wt%) and PP/AAPP(30 wt%) composites.

**Table 6**

| Sample | Pure PP | PP/ APP(30 wt%) | PP/ AAPP(30 wt%) |
|---|---|---|---|
| PHRR (Kw/m²) | 962±14 | 651±14 | 181±23 |
| THR (MJ/m²) | 74±2 | 92±5 | 40±4 |
| Av-MLR (g/s) | 7±1 | 9±2 | 4±1 |
| TSP(m²) | 7±1 | 11±1 | 4±1 |
| SPR (m²/s) | 0.07±0.01 | 0.07±0.01 | 0.02±0.01 |

Table 7 shows data obtained from TGA and DTG curves of non-irradiated and irradiated PP/AAPP(30 wt%) composites.

**Table 7**

| Sample | Tₒₙₛₑₜ (°C) | Tₘₐₓ (°C) | Rₘₐₓ (%/°C) | Residue (%) | |
|---|---|---|---|---|---|
| | | | | 500°C | 600°C |
| PP | 374 | 427 | 2.5 | 0.75 | 0.84 |
| PP+ AAPP (30 wt%) | 266 | 440 | 2.0 | 23.0 | 17.8 |
| EB PP+AAPP* (30 wt%) | 295 | 455 | 1.3 | 17.4 | 11.3 |

| | | | | | |
|---|---|---|---|---|---|
| Tₒₙₛₑₜ was the temperature of 5 % mass loss Tₘₐₓ was the temperature of maximum decomposing Rₘₐₓ was maximum weight loss rate *The composites were irradiated with a dose of 36 kGy | | | | | |

Table 8 shows mechanical properties of non-irradiated and irradiated PP/APP(30wt%) and PP/AAPP(30 wt%) composites.

**Table 8**

| Samples | Tensile strength (MPa) | Young modulus (MPa) | Elongation at break (%) |
|---|---|---|---|
| PP+ APP (30 wt%) | 24.6±1.8 | 1581.4±21.9 | 56.0±0.6 |
| PP+AAPP (30 wt%) | 23.7±1.8 | 1271.0±85.2 | 16.9±1.7 |
| EB PP* | 23.1±0.7 | 847.0±63.6 | 40.7±8.5 |
| EB PP+APP* (30 wt%) | 18.1±0.2 | 1072.0±73.5 | 15.7±1.7 |
| EB PP+AAPP* (30 wt%) | 20.2±0.2 | 1536.8±81.3 | 6.0±0.8 |

| | | | |
|---|---|---|---|
| *The composites were irradiated with a dose of 36 kGy | | | |

### Example 10

Both 1 kg APP and 1 kg of the prepared novel allylamine polyphosphate (AAPP, prepared according to example 1) were dried in a vacuum oven at 80 °C for 12 h before used. Then, PP mixed with 35 wt % of APP and AAPP were prepared by extrusion (twin-screw extruder KETSE 20/40 EC, Brabender) with rotation speed of 80 rpm at the following temperature protocol from the feed zone to the die: 175, 180, 180, 175, 175 and 170 °C. Finally, the pellets were put into injection molding machine (Arburg 320 C) at a processing temperature around 200 °C in order to produce the samples with suitable dimensions for on UL-94 sample, LOI, and tensile tests. In addition, cone calorimeter tests (CC) sample sheets were compression molded by hot-plate press (LabPro 400, Fontijne Presses) at around 210 °C.

Flame retardant PP composites were irradiated at room temperature in nitrogen atmosphere with an average dose 36 kGy using an ELV-2 electron accelerator (BINP, Novosibirsk, Russia). The electron energy was 1.5 MeV and the electron current amounted to 4 mA.

Table 9 shows LOI and UL94 results of pure PP, PP/APP(35 wt%) and PP/AAPP(35 wt%) composites.

**Table 9**

| Component (wt100%) | | | LOI% | UL94 | |
|---|---|---|---|---|---|
| PP | APP | AAPP | | Dripping | Rating |
| 100 | 0 | 0 | 17.6 | YES | N.R. |
| 65 | 35 | 0 | 20.5 | YES | N.R. |
| 65 | 0 | 35 | 33.7 | NO | V0 |

| | | | | | |
|---|---|---|---|---|---|
| N.R.: no rating | | | | | |

Table 10 shows cone calorimeter results of Pure PP, PP/APP(35 wt%) and PP/AAPP(35 wt%) composites.

**Table 10**

| Sample | Pure PP | PP/APP (35 wt%) | PP/AAPP (35 wt%) |
|---|---|---|---|
| PHRR (Kw/m²) | 962±14 | 581±22 | 229±25 |
| THR (MJ/m²) | 74±2 | 91±4 | 52±5 |
| Av-MLR (g/s) | 7±1 | 7±1 | 4±1 |
| TSP(m²) | 7±1 | 12±1 | 6±1 |
| SPR (m²/s) | 0.07±0.01 | 0.07±0.01 | 0.03±0.01 |

Table 11 shows data obtained from TGA and DTG curves of non-irradiated and irradiated PP/AAPP(35wt%) composites

**Table 11**

| Sample | Tₒₙₛₑₜ (°C) | Tₘₐₓ (°C) | Rₘₐₓ (%/°C) | Residue | (%) |
|---|---|---|---|---|---|
| | | | | 500°C | 600°C |
| PP+ AAPP (35 wt%) | 265 | 429 | 1.5 | 23.8 | 18.5 |
| EB PP+ AAPP* (35 wt%) | 291 | 453 | 1.3 | 21.2 | 11.4 |

Table 12 shows mechanical properties of non-irradiated and irradiated PP/APP(35wt%) and PP/AAPP(35 wt%) composites.

**Table 12**

| Samples | Tensile strength (MPa) | Young modulus (MPa) | Elongation at break (%) |
|---|---|---|---|
| PP+APP (35 wt%) | 22.2±0.7 | 1630.5±27.5 | 46.5±3.1 |
| PP+AA PP (35 wt%) | 21.6±0.1 | 1384.3±63.8 | 9.16±2.8 |
| | | | |
| EB PP+APP* (35 wt%) | 16.9±0.3 | 1225.5±23.5 | 17.3±2.7 |
| EB PP+A APP* (35 wt%) | 18.7±0.2 | 1590.1±172.8 | 4.1±1.4 |

## Claims

1. Modified multifunctional polyphosphate derived from polyphosphate 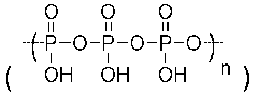 and/or ammonium polyphosphate 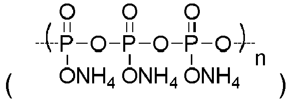 whose molecular structure can be expressed by the following general structure: 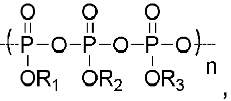 n=10-3000, wherein, R₁, R₂ and R₃ may be the same or may be different, but one of them contain carbon carbon double bond (C=C), wherein R₁ derived from allyl group of amine, may be 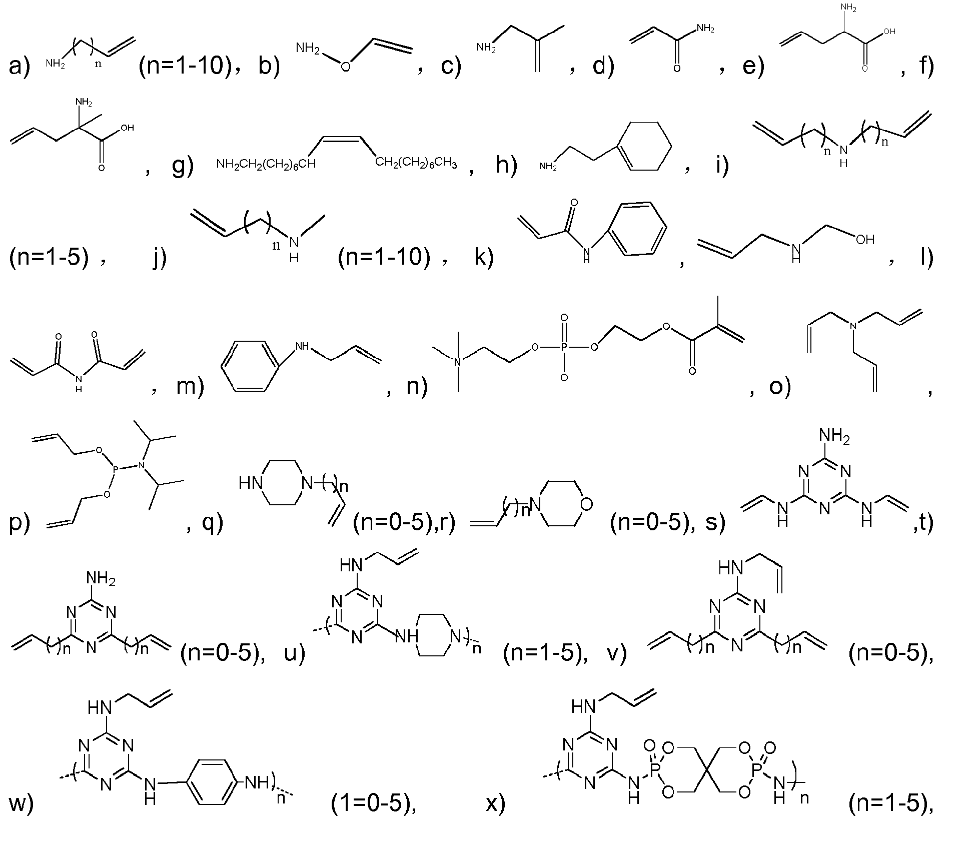 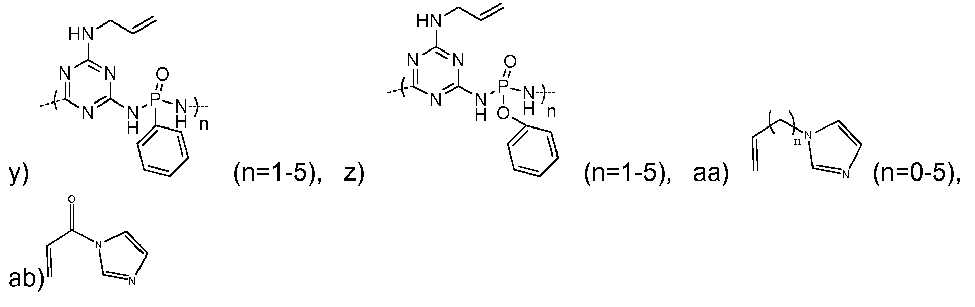 and/or their hydrochloride, and
Bwherein R₂ derived from cyclodextrin, whose molecular structure can be expressed by the following general structure: 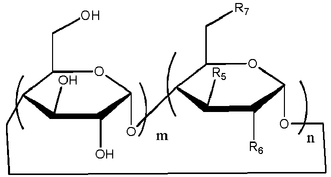
wherein, m is from 0 to 7 and n is from 1 to 8, m + n may be 6, 7, or 8, R₅, R₆ and R₇ are one of the -OH or -RNH₂ and one of R₁, R₂ and R₃ is -RNH₂. R is (CH₂)ₙ, NH (CH₂)ₙ, NH (CH₂)ₙ NH (CH₂)ₙ, CO (CH₂)ₙ or O (CH₂)ₙ, n is 1 - 15, and
wherein R₃, derived from allyl group of silicon, may be CH₂=CHNH (CH₂)ₙ Si(CH₃)₃. n is 0 - 15.

2. Modified multifunctional polyphosphate according to claim 1, wherein R₁ is a) with n = 1.

3. Modified multifunctional polyphosphate according to claim 1, wherein 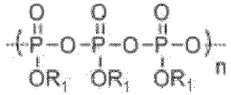 with n=10-300,

4. Method to prepare modified multifunctional polyphosphate, wherein polyphosphate 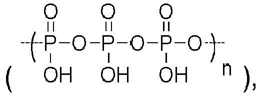 and/or ammonium polyphosphate 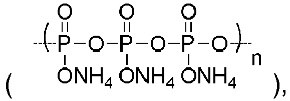 whose molecular structure can be expressed by the following general structure: 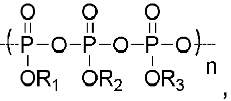 n=10-3000, were mixed with organic solvent and water or water under inert gases, then the modifier R₁ and/or R₂ and/or R₃ were added together or one or more of R₁ and R₂ and R₃ were added stepwize, then, the mixture was heated up to temperature to modify the polyphosphate or ammonium polyphosphate, next, the reaction mixture was cooled down to room temperature, after that, the mixture was concentrated at reduced pressure and washed with organic solvent, then the solid was filtered and the sample was dried in a vacuum oven at 80 °C for 12 h, then, the product was melt mixed with polymer or polymer blend, and afterwards a further processing of modified multifunctional polyphosphate containing polymer or polymer blend is possible.

5. Method according to claim 4, wherein the organic solvent and water ratio were 0-0.5 and 1.

6. Method according to claim 4, wherein the organic solvent is acetone, methanol, ethanol, isopropanol, chloroform or tetrahydrofuran.

7. Method according to claim 4, wherein the polymer includes PP, PE, PET, rubber, PVC, PLA, Epoxy, EVA, PA, PBT, ABS, PVA, PI.

8. Method according to claim 4, wherein the modified multifunctional polyphosphate was mixing in twin-screw extruder, three-roll mill and/or injectors to prepare a polymer composite.

9. Method according to claim 4, wherein as a continued processing an electron beam treatment or peroxides, UV and/or gamma irradiation is used.

10. Method according to claim 9, wherein the electron beam treatment will use with dose from 5 to 500 kGy.
